# EUROPEAN PATENT APPLICATION

(11) **EP 1 151 885 A1**
(43) Date of publication of application: **07.11.2001**
(21) Application number: 01201583.0
(22) Date of filing: 01.05.2001
(51) Int. Cl.: B60J 10/08, B60J 10/00, E06B 7/23

(54) **Loading space, provided with watertightly sealing doors**

(30) Priority: 02.05.2000 NL 1015090
(71) Applicant: REYNOLDS ALUMINIUM HOLLAND B.V., NL-3846 BX Harderwijk (NL)
(72) Inventor: Gijsbers, Erik Henderik, 8253 AD Dronten (NL)
(74) Representative: Prins, Adrianus Willem

(57) **Abstract**

A loading space (2) provided with at least two doors (4,6) and a frame (12), wherein the doors (4,6) are jointly capable of closing off a door opening defined by the frame (12), wherein the doors (4,6) are pivotally connected by a first longitudinal side thereof to the opposed posts of the frame, wherein each of the doors in a plane at least approximately parallel to the door plane is provided with a sealing profile (14,16) which, by at least one substantially lip-shaped profile part (46), extends at least partly outside the longitudinal edge (26,28) of the respective door (4,6), while at least the lip-shaped parts (46) of the sealing profiles (14,16) on the second longitudinal edges (26,28), remote from the first sides (22,24), located next to each other, overlap each other at least partly when the doors are closed.

## Description

This invention relates to a loading space provided with two doors capable of jointly closing off a door opening in the frame.

Door posts of loading spaces usually have the problem that leakage occurs, in particular adjacent the top thereof, especially in the middle, there where the two doors lie next to each other. Usually, the doors are provided with sealing profiles extending along the longitudinal edges thereof. Along the upper sides of the doors, in particular when the doors abut on the frame, sealing profiles are provided which have a lip extending approximately in line with the inner face of the doors. Along the vertical side of the door that closes last, by contrast, a sealing profile is provided which comprises a lip situated in line with the outer face of the doors. Along the door that is closed first, the vertical side proximal to the other door, is provided, on the side proximal to the loading space, with a closing edge, while in the sealing profile the lip mentioned is omitted. Along the vertical longitudinal edges which, with the doors closed, adjoin the frame, sealing profiles are provided without lips, but with a concave outer side and a chamber. As a result of the fact that the above-mentioned sealing profiles on the different sides of the doors all have a different cross section and moreover are situated substantially in different planes, special transitions are necessary, in particular at the corners of the doors. As a consequence, such doors are particularly costly in manufacture and maintenance. Moreover, these profiles lead to leakages, precisely at the corners mentioned, in particular in the use as a loading space of a transport vehicle, such as a lorry or container. As a further consequence, there is a substantial chance of errors in assembly. A further disadvantage of such loading spaces is that at least at the mutually facing sides of the doors, the sealing profile extends against the outer side of the doors, which leads to an unfavorable appearance and moreover increases the chance of contamination and damage.

The object of the invention is to provide a loading space of the type described in the preamble, which avoids the above-mentioned disadvantages while maintaining the advantages thereof. To that end, a loading space according to the invention is characterized by the features of claim 1.

Owing to the feature that, with the doors closed, in a loading space according to the invention, the lip-shaped parts of the sealing profiles at least partly overlap each other there where the doors are located next to each other, a particularly good sealing is obtained, while the sealing profiles are situated in substantially the same plane. There where fitted, the sealing profiles can always have the same cross section, and, partly as a result of that, can be made of continuous design for each door. Adjacent the corners of the doors, the sealing profiles can, for instance, be mutually connected by corner connecting parts or by vulcanizing. By virtue of, in particular, the overlapping parts of the sealing profiles, a double sealing is obtained, so that in particular also the corners of the doors are sealed adjacent the upper edge. It is incidentally noted that such a seal can be obtained both adjacent the top and adjacent the bottom of the doors.

A further advantage of a loading space according to the invention is that the doors can be built up from standard profiles, while on the outer side of the doors the sealing profiles are substantially not visible. The external side can remain substantially flat.

In an advantageous further elaboration, a loading space according to the invention is further characterized by the features according to claim 3.

By providing a closing profile which supports the sealing profile along the second side of the second door, the watertight closure of the doors is guaranteed still better. The fact is that the lip-shaped part of the respective sealing profile on the second door cannot be pushed away in the direction of the interior of the loading space, so that a good mutual abutment of the two lip-shaped parts is ensured still better. Moreover, as a result, a proper support of the lip-shaped parts is obtained, so that they can be made of relatively simple and flexible design.

In a further advantageous embodiment, a loading space according to the invention is further characterized by the features of claim 6.

By arranging for the closing profile to overlap to some extent the lip-shaped part of the sealing profile at least adjacent the corners of the door, an additional support is obtained, so that the proper sealing is supported, while over the further height of the second door the sealing profile can be omitted. As a result, less material is needed and the chance of errors in assembly is reduced still further. In this embodiment, preferably only adjacent the upper end, as well as adjacent the lower end, a limited length of sealing profile is provided along the second longitudinal edge of the second door, while on the intermediate portion the closing profile is mounted.

Preferably, a loading space according to the invention is further characterized by the features of claim 8.

The use of a sealing profile of a concave shape on the side remote from the lintel provides the advantage that drainage is improved still further. This shape substantially prevents the possibility of water collecting on the upper side of the doors, also with doors abutting against the frame on the outside.

It is preferred that the doors are built up from profiles, in particular extruded aluminum profiles, which comprise a door panel. In these profiles, for instance, grooves may then be provided, in which the sealing profiles and the closing profile can be fixed. This simplifies assembly still further, while a light, relatively stiff door construction can be obtained. By providing the sealing profiles with a base part fitting in the groove, and the closing profile with a clamping part fitting in the same groove, the length of the clamping part and the base parts on the second side of the second door being so selected that these link up with each other. The closing profile then has, for instance, stepped or slanting ends, while the part of the closing profile covering the lip-shaped parts has a greater length than the clamping part. This enables a still simpler assembly.

The invention further relates to a loading space according to claim 11.

In such a loading space, the advantage is achieved that the doors can open through a relatively large angle, for instance through an angle between 180 and 270 degrees, while a simple hinge construction is obtained. Each of the hinge pivots then only needs to enable a part of the swinging movement. Moreover, to that end, no hinge parts need to extend on the outside against the door faces. As a result, a more pleasant appearance can be obtained and the risk of anyone getting injured due to projecting parts can be eliminated, while moreover in optimum manner use can be made of the volume within the loading space, while the total loading space on the outside does not exceed the maximum allowable dimensions. This is of importance in particular when such a loading space is used in a vehicle such as a lorry, in respect of which maximum lengths are prescribed by law or apply for practical reasons such as modularity. This effect is still further enhanced in that the doors are placed against the outer side of the frame. As a result, in a still more optimal manner, use is made of the maximum inner space of the loading space.

Preferably, each door is suspended from a series of hinge elements, while the hinge axes are defined by hinge pins which mutually connect the hinge elements, such that rotation of one of the hinge elements relative to one of the other hinge elements in the respective series is prevented by the respective hinge pin. As a result, torsion of the respective door is simply prevented. For that matter, to that end, in principle, the hinge elements only need to be mutually connected by one of the hinge pins, in particular the one with which the hinge elements are coupled with the door, but in the same manner also the other hinge pin may be connected with the hinge elements so as to be fixed in position.

The invention further relates to an assembly of at least two doors and a frame for use in a loading space according to the invention.

In the further subclaims, further advantageous embodiments of a loading space according to the invention are described.

To clarify the invention, exemplary embodiments of a loading space according to the invention, in particular a door assembly, hinge construction and sealing profiles used therewith, will be further elucidated with reference to the drawings. In the drawings:
Fig. 1 shows, in rear view, a loading space according to the invention, closed by two doors;
Fig. 2 shows, viewed from the inside of the loading space, a portion of the two doors, adjacent the upper end thereof;
Fig. 3 shows, in sectional top plan view, the adjacent longitudinal edges of the two doors along the line III-III in Fig. 2;
Fig. 4 shows a sectional top plan view of the adjacent longitudinal edges of the doors along the line IV-IV in Fig. 2;
Fig. 5 shows, in enlargement, two mutually overlying lip-shaped parts of sealing profiles on the two doors, together with a portion of a closing profile;
Fig. 6 shows, in schematic side elevation, the connection of a door to the upper lintel of a frame;
Fig. 7 shows, in cross-section top plan view, a hinge construction according to the invention;
Fig. 8 shows, in perspective view, a portion of a door and frame set with a hinge construction according to the invention;
Fig. 9 shows, in perspective view, an upper central part of a door assembly according to the invention, in an alternative embodiment; and
Fig. 10 shows, in side elevation, a corner connecting element for use within the invention.

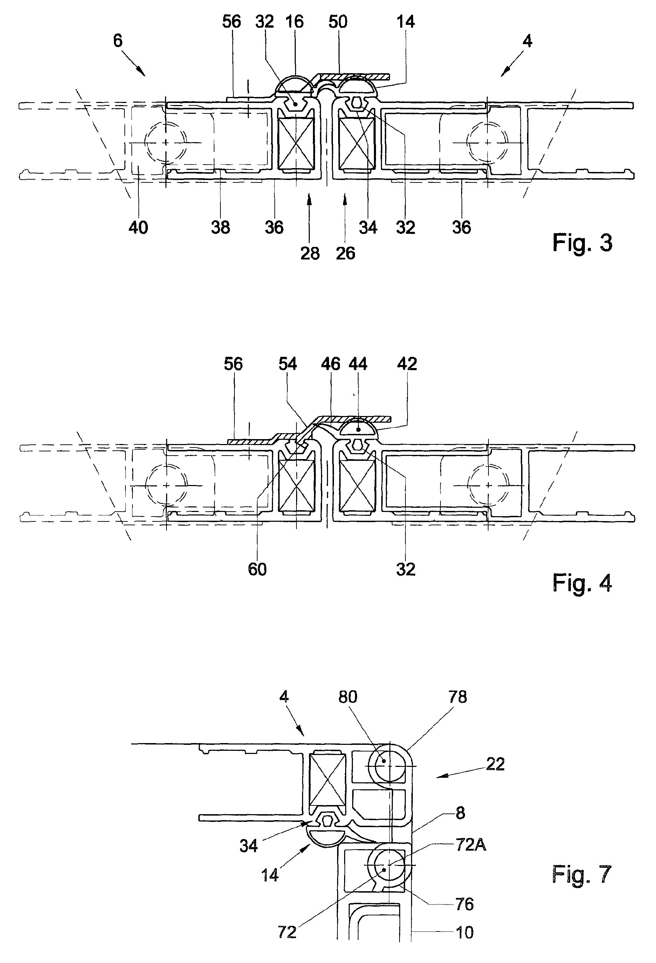

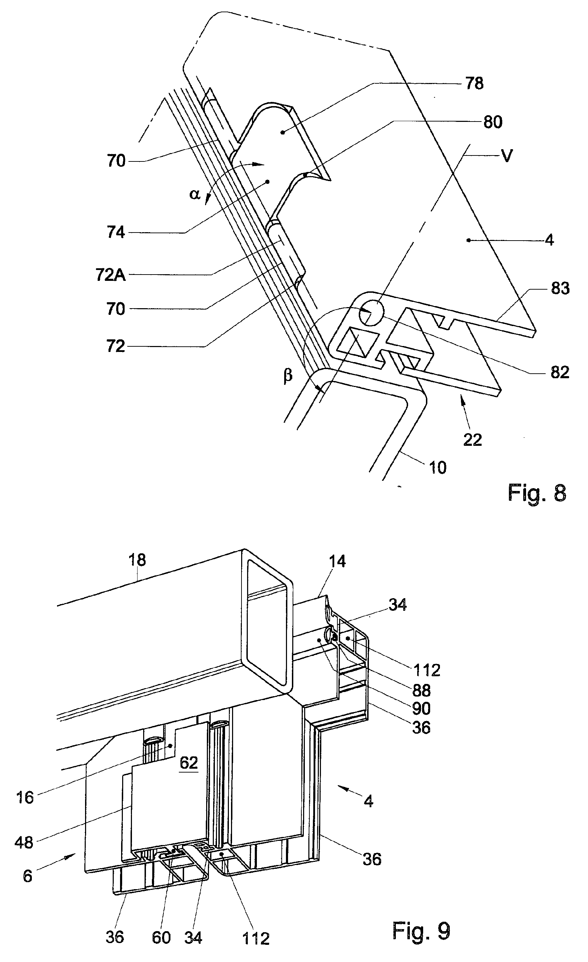

In this description, the same or corresponding parts have the same or corresponding reference numerals. In this description, the starting point is at least doors which have been built up from extruded, aluminum sections, which can enclose door panels. Such a construction is known per se, for instance from the construction of cladding panels, truck bodies and the like. It will be clear, however, that the doors according to the present invention can also be designed in a different way, for instance from welded parts, from sandwich panels finished in a different manner, from massive panels or the like. A frame for use within a loading space according to the invention, which frame is conventionally also referred to as portal, may also, for instance, be built up from extruded aluminum profiles, for instance as shown schematically in Figs. 7 and 8, but may also be manufactured from, for instance, steel profiles, plastic profiles or the like. Such embodiments expressly fall within the scope of protection of the presented invention.

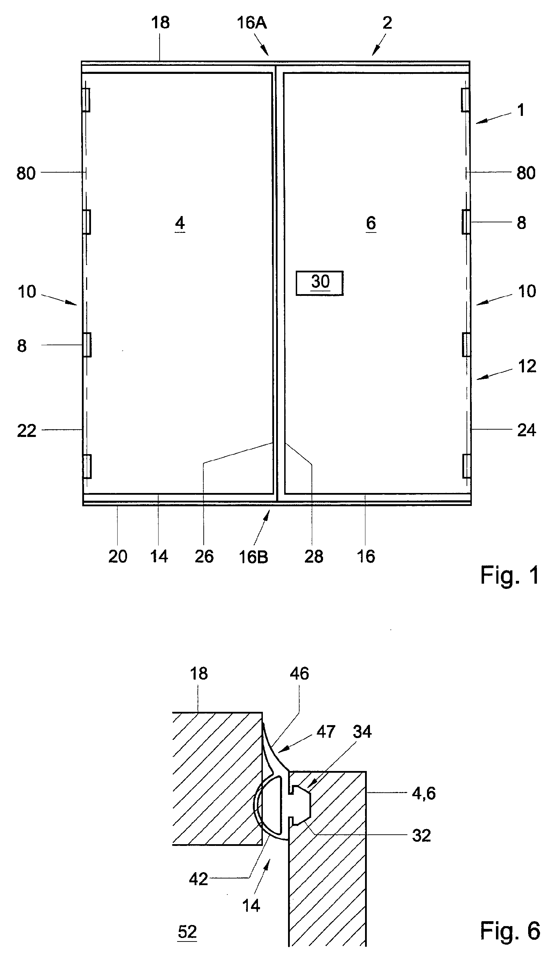

In Fig. 1 a door set 1 for a loading space 2 is shown, in closed condition. This loading space is, for instance, a loading space of a truck or a container. The door set 1 comprises a first door 4 and a second door 6, which doors are shown in closed condition in Fig. 1. The two doors 4, 6 are each suspended by way of four hinge elements 8, which will be further described hereinafter, from the vertical posts 10 of a frame 12, so as to be pivotable from the plane of the drawing to an opened position, the doors swinging, for instance, through about 270° from the plane in rearward direction, extending along sidewalls of the loading space, perpendicular to the plane of the drawing. As will be explained in more detail, when closing the doors, first the second door 6 has been swung against the frame 12, and then the first door 4, such that a sealing profile 14 extending around the first door 4 abuts against the outer side of a comparable sealing profile 16 of the second door 6. The overlying parts of the sealing profiles 14, 16 provide for a particularly good watertight closure. This will be elucidated in more detail hereinafter.

In this description, the following definitions will be used. The frame 12 is formed from two vertical posts 10 extending in vertical direction, mutually connected at the upper ends by a lintel 18 and at the lower ends by a sill 20. As indicated, the door shown on the left in Fig. 1 is the first door 4, the right-hand door is the second door 6. The first door 4 is connected on a first side 22 via the hinge elements 8 with the vertical post 10; the second door 6 is connected on its first side 24 via the respective hinge elements 8 with the corresponding, opposite vertical post 10. The longitudinal edge of the first door 4 shown on the left in Fig. 1 will be designated as the second longitudinal edge 26, whilst the adjacent longitudinal edge of the second door 6 will be designated as the second longitudinal edge 28. For simplicity, in Fig. 1 the extruded profiles from which at least the framework of the respective doors 4, 6 is built up are not shown. Also omitted in the drawing are the conventional closing means, of which the lock plate 30 is schematically shown. Such closing means, however, are sufficiently known from practice and, for instance, of the espagnolette type.

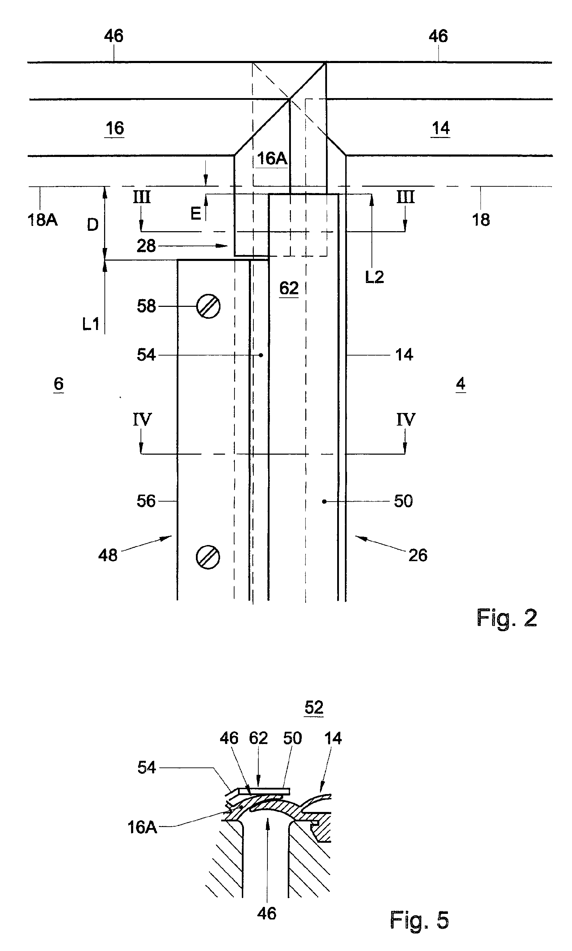

In Fig. 2, from the inside, a portion of an upper part of the doors 4, 6 is shown, mirrored with respect to Fig. 1. In Fig. 2, by means of a chain-dotted line 18A, the lower edge of the lintel 18 is represented. As appears clearly from Fig. 2, on the inside of the doors 4, 6, at least along the upper edge thereof, a sealing profile 14, 16 is provided, which is fixed by a base part 32 thereof in a groove 34, in a manner known per se. To that end, for instance, the second longitudinal edges 26, 28 of the doors 4, 6 are formed by extrusion profiles 36, which profiles are identical to each other and have been placed in mirrored relation. The respective profiles 36 have flanges 38 extending in a direction facing away from each other, between which a desired door panel 40 can be fixed. The grooves 34 have been co-extruded in the profile 36. The groove 34 extends along the entire longitudinal edge of doors 4, 6, that is, in both the horizontal and the vertical parts, while, as shown in Fig. 7, adjacent the first longitudinal edges 22, 24, the groove 34 is provided somewhat more inwards, so that the respective sealing profile 14 at that point extends entirely within the outer contour of the respective door 4 and, with the door closed, can abut against the vertical post 10, with slightly elastic deformation. It is incidentally noted that in the drawings, at least in the Figs. 3, 4, 6 and 7, the sealing profiles 14, 16 are at least partly represented undeformed. The deformed position will be immediately clear to anyone skilled in the art.

Fig. 2 clearly shows that the sealing profile 14 extends on the inside along the second longitudinal edge 26 over the entire height thereof, secured in the groove 34. As appears clearly from, for instance, Figs. 3 and 4, each sealing profile 14, 16 comprises a slightly spherical first profile part 42, supported on the base 32 and comprising a chamber 44, from which first profile part 42 extends a lip-shaped part 46 which, at least in undeformed condition, is slightly spherical and is reduced in a direction away from the first profile part 42. The sealing profiles 14, 16 are, for instance, extruded from rubber or a plastic material having rubbery properties. Such materials, used for comparable sealing rubbers, are sufficiently known from practice. It is important that the sealing rubbers, in normal use, remain elastically deformable for a prolonged time and are watertight.

As appears in particular from Fig. 2, an upper profile part 16A extends along the upper part of the second longitudinal edge 28 of the second door 6, which upper profile part 16A has a length such that, linking up with the horizontal profile part 16, it extends to a distance D under the lower edge 18A of the lintel 18. As a consequence, in closed condition of the doors, the lip-shaped parts 46 of the profiles 14, 16A extending along the second longitudinal edges 26, 28 overlie each other, and thus provide for a particularly good sealing, as shown in more detail in Fig. 5. Preferably, the doors 4, 6 are designed in the same manner adjacent the lower end, in a position mirrored along a line parallel to the lintel 18.

On the inside of the second door 6, along the second longitudinal edge 28, a closing profile 28 is mounted, such that a first flange 50 thereof extends parallel to the second longitudinal edge 28, at some distance from the inner face of the doors 4, 6, while the side of the lip-shaped part 46 of the upper profile part 16A facing the loading space 52 abuts against the side of the first flange 50 facing the door 6. The first flange 50 is connected via an inclined part 54 with a second flange 56 which is secured against the inside of the door 6, for instance through gluing or, as schematically represented, by screws 58. The second flange 56 is provided, on the side remote from the inclined part 54, with a clamping part 60 capable of engaging under a longitudinal edge of the groove 34, as shown in Fig. 4, such that the closing profile is connected with the second door 6 so as to be fixed in position. The second flange 56 has a length L₁ which is selected such that it can be received, at least with a substantially proper fit, between the upper profile part 16A and a comparably arranged lower profile part 16B, not shown, or, in the absence of such a lower profile part 16B, to a point adjacent the sill. The first flange 50 has a length L₂ which is greater than the length L₁, such that the first flange 50 comprises a part 62 projecting above the second flange 56, as well as a comparable projecting part adjacent the lower end (not shown). The closing profile 48 thus has stepped ends, while the projecting parts 62 extend at least partly over the overlying lip-shaped parts 46, as shown in detail in Fig. 5. The second flange 56 terminates, as shown, approximately at the distance D from the lintel 18 and at an equal distance from the sill 20, while the first flange 50 terminates at a much smaller distance E from the lintel 18 and sill 20. This prevents the possibility of the lip-shaped parts 46, in particular the upper part 16A and/or the lower part 16B thereof, being deformed inwardly, for instance as a result of a pressure difference between the loading space 52 and the surroundings. The possibility of leakage of water from the surroundings into the loading space 52 is thus prevented still better.

As appears clearly from the drawings, the grooves 34 in the profiles 36 are situated in one plane and so the sealing profiles placed therein can be mutually coupled directly.

Fig. 6 shows, in sectional side elevation, an upper part of a door 4, 6 and the lintel 18, which, in the embodiment shown, is represented as being massive. Between the lintel 18 and the door 4, 6, a sealing profile 14 is received, the first profile part 42 of which is represented undeformed. The lip-shaped part 46, by contrast, is represented in elastically deformed condition, with the lip 46 sealing against the lintel 18 and forming, on the side remote from the lintel, a concave surface 47 linking up with the upper side of the door 4, 6. This prevents the possibility of water remaining on the upper side of the door 4, 6 and/or on the profile 14, and, for instance upon opening of the door, flowing into the loading space 52 after all. The fact is, also with the door open, the lip-shaped part 46 will maintain a concave surface 47, although the bending radius thereof will be slightly greater.

Fig. 8 shows, in perspective view, in cross section, a post 10, schematically represented as a portion of a, for instance U- or O-shaped, profile, as conventionally employed in bodywork construction. This post 10 is manufactured, for instance, from steel. On the post 10, two hinge supports 70 are secured, for instance welded. These hinge supports 70 comprise mutually aligned cylindrical holes in which extends a first hinge pin 72. This hinge pin 72 defines a first hinge axis 72A. Between the hinge supports 70, a hinge element 8 is mounted on the first hinge pin 72, such that the hinge element 8 is rotatable about this hinge pin 72 through an angle α, which is about 90° in the embodiment shown. The hinge element 8 comprises a substantially flat back 74, merging at opposite ends into a cylindrical part. A first cylindrical part 76 has been slid onto the first hinge pin 72; the second cylindrical part 78 has been slid onto a second hinge pin 80, extending parallel to the first hinge pin 72, through a corresponding chamber 82 in the profile 83 forming the first longitudinal edge 22 of the door 4. To that end, the side of the door is provided with a recess fitting for the hinge element 8. The second hinge pin 80 preferably extends over substantially the full height of the door 4, 6 and connects the hinge elements 8. The second hinge pin is preferably fixedly connected with the four hinge elements 8 on the respective side of the respective door 4, 6, for instance through a dimensional or clamped fit, such that the hinge elements 8 cannot rotate independently of each other. This prevents the possibility of the door deforming in a partly opened position and becoming suspended askew from the hinge elements 8. In the embodiment shown in Fig. 8, the first hinge pin 72 and the second hinge pin 80 are parallel to each other in a plane V extending at right angles to the door planes when the doors are closed. The door 4 can hinge about the second hinge pin 80 through an angle β of, for instance, about 180°, at least when the hinge elements 80 have been swung outwards through the angle α. Naturally, pivoting through the angles α and β can be partly performed simultaneously.

Fig. 9 schematically shows an alternative embodiment of a door set with lintel according to the invention, corresponding to the portion as shown in Fig. 2. In this embodiment, the mitred extruded aluminum profiles 36 are clearly shown, from which the longitudinal edges of the doors 4, 6 are formed. In this embodiment, each profile 36 comprises a first groove 34 located adjacent the longitudinal edge, in which a sealing profile 14, 16 is fixed, comparable to that as shown in the earlier figures. On the side of the profiles 14, 16 proximal to the inner face of the respective door 4, 6, a second groove 88 is formed, in which a second sealing profile 90 is fixed, which comprises an elastically deformable, semicircular profile part with a chamber. In this embodiment, the closing profile 48 has been slid with a base, at least clamping part 60, into the first groove 34, while bridging the second profile 90. In the embodiment shown, however, the second profile 90 is cut off directly under the lintel 18. Here, too, the projecting part 62 of the closing profile 48 is visible. The additional sealing profile 90 provides for a still better watertight seal.

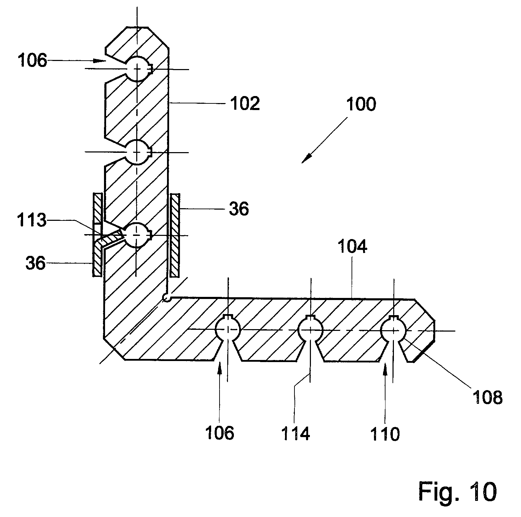

Fig. 10 shows in side elevation a corner profile 100, suitable for the mutual connection of the profiles 36. This corner profile 100 comprises a first leg 102 and a second leg 104 extending at right angles thereto, each leg being provided with three mutually parallel grooves 106 which are open in outward direction. Each groove 106 comprises a cylindrical part 108 and a slightly V-shaped part 110 linking up therewith, which is open and widens in outward direction. A corner element 100 can be used as follows.

Two profiles 36 are sawn off at an angle of 45°, so as to fit together to enclose an angle of 90°, as shown, for instance, in Fig. 9. A first leg 102 is subsequently slid from the side sawn off at 45° into a chamber 112 of a first profile 36, while the other leg 104 is slid into the corresponding chamber 112 of the other profile 36 forming the angle. The profiles 36 are thereby fixed in a direction perpendicular to the plane of the door 4 to be formed. Thereupon, from a side of the profile, a screw or like slightly cylindrical fastening means is screwed into the cylindrical part 108 of a groove 106, parallel to the longitudinal axis thereof, perpendicular to the plane of the drawing, as a result of which the profiles 36 are also fixed in the longitudinal direction. Preferably, the respective screw or bolt 114, shown in Fig. 10 as centerline, is screwed through the bottom of the groove 34, so that it is covered by the respective profile 14, 16. It is also possible with the aid of special tools to press a portion 113 of the wall of the respective profile 36, for instance through a punching operation, into the V-shaped part 110 of the groove 106, as schematically drawn in the lower groove 110 in the leg 102 extending vertically in the drawing, so that also a lock in the longitudinal direction of the profile 36 can be obtained. Thus, with such corner pieces, a particularly simple and elegant manner of connection is obtained.

The invention is not limited in any way to the exemplary embodiments shown in the description and the drawings. Many variations thereon are possible within the scope of the invention as outlined by the claims.

Thus, the doors can have different shapes, for instance square, and be structured differently, for instance be solid. Also, the sealing profiles 14, 16 can be differently shaped, for instance by replacement of the first profile part with a number of mutually parallel flexible ridges or ribs, several chambers or like shapes known from the sealing art. Further, the doors can be connected to the posts with other means, for instance by the use of conventional hinges. Naturally, the lip-shaped parts 46 too can be shaped differently and be provided, for instance, with local weakened and/or stiffened portions, in order to initiate specific deformations. Also, the profiles may be provided with ridges or the like instead of, or in addition to, the grooves 34, on which the sealing profiles 14, 16 and/or the closing profile 48 can be fixed. The hinge elements 8 are also applicable with doors of a different kind, with different sealings. The embodiments shown are described as loading space of, for instance, a truck, but it will be clear that such doors are also applicable, for instance, in containers, storage spaces such as silos and the like.

These and many comparable variations are understood to fall within the scope of the invention outlined by the claims.

## Claims

1. A loading space provided with at least two doors and a frame, wherein the doors are jointly capable of closing off a door opening defined by the frame, wherein the doors are pivotally connected by a first longitudinal side thereof to the opposed posts of the frame, wherein each of the doors, in a plane at least approximately parallel to the plane of the door, is provided with a sealing profile which, by at least one substantially lip-shaped profile part, extends at least partly outside the longitudinal edge of the respective door, while at least the lip-shaped parts of the sealing profiles on the second longitudinal edges, remote from the first sides and located next to each other, overlap each other at least partly when the doors are closed.

2. A loading space according to claim 1, wherein at least the upper sides of the doors abut against the front side of the frame.

3. A loading space according to claim 1 or 2, wherein a first door on the second side thereof is provided over the entire height with said sealing profile, while the adjacent second door is provided over at least a part of its height with a closing profile which extends outside said longitudinal edge of the second side, on the side of the door leading in the closing direction of the doors, while, with the doors closed, the lip-shaped part of the sealing profile of the first door can fittingly abut against the closing profile and/or the sealing profile of the second door.

4. A loading space according to claim 3, wherein the sealing profile on the second door extends along a top part of the second longitudinal edge of the second door, at least so far as to link up with the end of the closing profile facing upwards.

5. A loading space according to claim 3 or 4, wherein the sealing profile on the second door extends along a bottom part of the second longitudinal edge of the second door, at least so far as to link up with the end of the closing profile facing down.

6. A loading space according to claim 4 or 5, wherein the closing profile at least partly covers at least the or each lip-shaped part of the sealing profile adjacent the second longitudinal edge, such that, with the doors closed, the or each respective lip-shaped part is confined between the respective part of the sealing profile and the lip-shaped part of the corresponding part of the closing profile on the first door.

7. A loading space according to any one of claims 3-6, wherein the frame has a lintel and a sill, while the closing profile has a length such that, with the doors closed, the upper and lower end thereof are situated at a relatively small distance from the lintel and sill, respectively.

8. A loading space according to any one of the preceding claims, wherein the lip-shaped part of the sealing profile along the upper side of the doors, with the doors closed, abuts against the outer side of the lintel of the frame, while said part has a slightly concave shape on the side remote from the lintel.

9. A loading space according to any one of the preceding claims, wherein each door is built up from profiles extending along the sides of the door, preferably extruded aluminum profiles, while each profile is provided with at least one groove in which the sealing profiles are fixed with a base part, while the closing profile is fixed in at least the respective groove in the profile extending along the second side of the second door.

10. A loading space according to claim 9, wherein the closing profile has a stepped end adjacent the upper end and lower end, such that the part thereof extending along the or each lip-shaped part has a length greater than the part thereof extending in the groove, the arrangement being such that the base part of each sealing profile extending along the second longitudinal edge of the second door links up with or is spaced from a clamping part of the closing profile, extending in the groove, while the longer part of the closing profile supports the sealing profile.

11. A loading space according to any one of the preceding claims, wherein each door is connected with a post via a number of hinge elements, wherein each hinge element is connected via a first hinge pin with the door and via a second hinge pin with the post, which first and second hinge pins are located parallel to each other.

12. A loading space according to claim 11, wherein the distance between the first and the second hinge pin is smaller than the thickness of the door.

13. A loading space according to claim 11 or 12, wherein the hinge pins, with the doors closed, extend behind each other, in a plane approximately at right angles to the plane of the doors.

14. A loading space according to any one of claims 11-13, wherein each door is suspended with the aid of a series of hinge elements, while each hinge axis is defined by a hinge pin, which mutually connects the hinge elements, such that the movements of the hinge elements are mutually coupled.

15. An assembly of at least two doors and a frame, for use in a loading space according to any one of the preceding claims.
